# EUROPÄISCHE PATENTANMELDUNG

(11) **EP 0 808 089 A1**
(43) Veröffentlichungstag der Anmeldung: **19.11.1997**
(21) Anmeldenummer: 96107894.6
(22) Anmeldetag: 17.05.1996
(51) Int. Cl.: H05K 7/00, G01K 1/14, H01H 37/04, H01H 37/54

(54) **Schutzgehäuse mit Deckel und dosenförmigem Rückenteil zur Montage einer mit einem Kapillarrohr versehenen Baugruppe**

(71) Anmelder: ETHECO European Thermostat Company S.p.A., 84131 Salerno (IT)
(72) Erfinder: Reifers, Alfred, 8910 Affoltern (CH); Moser, Andres, 6312 Steinhausen (CH); Kramer, Johannes, 6300 Zug (CH)
(74) Vertreter: Fraipont, Oskar

(57) **Zusammenfassung**

Ein Boden (5) des dosenförmigen Rückenteils (2) ist aussen so ausgebildet, dass das letztere sowohl auf ein senkrecht zum Boden (5) verlaufendes Schutzrohr (6) als auch auf ein parallel zum Boden (5) verlaufendes Durchflussrohr sowie auf eine Wand montierbar ist. Der Boden (5) weist unter anderem auf seiner Rückseite eine Ausnehmung (7) auf zur Aufnahme eines Endes des senkrecht zum Boden (5) verlaufenden Schutzrohrs (6). Das Schutzgehäuse ist ein Universal-Schutzgehäuse, mit dessen Hilfe die Anzahl Ausführungsvarianten verringert wird, insbesondere ist es für alle vorkommenden Montagenvarianten verwendbar. Ausserdem sind eine Montage flacher anderer Baugruppenarten, wie z. B. gedruckte Schaltungen, ein Herstellen von Mehrfachgehäusen aus Einzelgehäusen und Schutzrohrmontagen mit unterschiedlichen Schutzrohrtiefen möglich. Die Baugruppe (4) enthält einen Temperaturregler, einen Temperaturwächter oder einen Sicherheits-Temperaturbegrenzer.

## Beschreibung

Die Erfindung bezieht sich auf ein Schutzgehäuse mit Deckel und dosenförmigem Rückenteil zur Montage einer mit einem Kapillarrohr versehenen Baugruppe gemäss dem Oberbegriff des Anspruchs 1.

Die mit einem Kapillarrohr versehene Baugruppe enthält vorzugsweise einen Temperaturregler, einen Temperaturwächter oder einen Sicherheits-Temperaturbegrenzer. An einem Ende des Kapilarrohrs ist ein Fühler, bevorzugt ein länglicher stabförmiger Temperaturfühler, angeschlossen. Der Sicherheits-Temperaturbegrenzer dient z. B. zur Sicherheitsabschaltung von Wärmeerzeugern bei defekter Regulierung oder als Abgas-Temperaturbegrenzer zum Schutz von Kunststoffrohren und kann nur manuell wieder eingeschaltet werden. Im letzteren Fall ist der Temperaturfühler z. B. in der Wand des Kunststoffrohrs montiert und erfasst die Temperatur der Abgase innerhalb des Kunststoffrohrs. Der Temperaturregler dient z. B. der Regulierung von Wärmeerzeugern und ist z.B. ein Raumtemperaturregler, der eine Raumtemperatur regelt, wobei der Temperaturfühler in diesem Fall die Raumtemperatur erfasst. Der Temperaturwächter dient z. B. der Überwachung von Wärmeerzeugern. Die mit einem Kapillarrohr versehene Baugruppe enthält in der Regel mindestens ein elektrisches, mit elektrischen Anschlüssen versehenes Bauteil sowie oft einen Masseanschluss, wobei an den Anschlüssen jeweils elektrische Leiter anschliessbar sind. Das elektrische Bauteil ist z. B. ein einpoliger Umschalter. Der Sicherheits-Temperaturbegrenzer muss eigensicher sein, d. h. ein Kapillarrohrbruch führt zum Öffnen des Lastkreises. Der Temperaturregler und der Temperaturwächter können eigensieher oder nicht eigensicher sein. Alle Baugruppen müssen den Normvorschriften DIN 3440 und EN 60 730-1 bzw. EN 60 730-2-9 genügen.

Bekannte Schutzgehäuse sind nur für eine im voraus festgelegte Anwendungsart einsetzbar. Eine andersartige Montageart ist mit dem gleichen Gerät nicht möglich. Für jede Tauchtiefe des Schutzrohrs des Temperaturfühlers muss eine andere Gerätevariante eingesetzt werden. Dies führt zu vielen Ausführungsvarianten, einer langen Beschaffungszeit und einer umfangreichen Lagerhaltung mit entsprechend hohen Kosten.

Der Erfindung liegt die Aufgabe zugrunde, die bekannten Schutzgehäuse so zu verbessern, dass ein Universal-Schutzgehäuse entsteht, mit dessen Hilfe die Anzahl Ausführungsvarianten verringert wird. Insbesondere ist das erfindungsgemässe Schutzgehäuse für alle vorkommenden Montagenvarianten, wie z. B. Schutzrohr-, Anlege- und Wandmontage, verwendbar. Ausserdem sind eine Montage flacher anderer Baugruppenarten, wie z. B. gedruckte Schaltungen, ein Herstellen von Mehrfachgehäusen aus Einzelgehäusen und Schutzrohrmontagen mit unterschiedlichen Schutzrohrtiefen zwischen z. B. 100 mm und 600 mm möglich.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: eine Vorderansicht eines Schutzgehäuses mit Inhalt und einem durchsichtig angenommenen Deckel,
- Fig. 2: einen senkrechten Querschnitt des Schutzgehäuses mit Inhalt und einer angedeuteten Schutzrohrmontage,
- Fig. 3: einen waagerechten Querschnitt des Schutzgehäuses mit Inhalt und
- Fig. 4: eine Rückenansicht eines dosenförmigen Rückenteils des Schutzgehäuses.

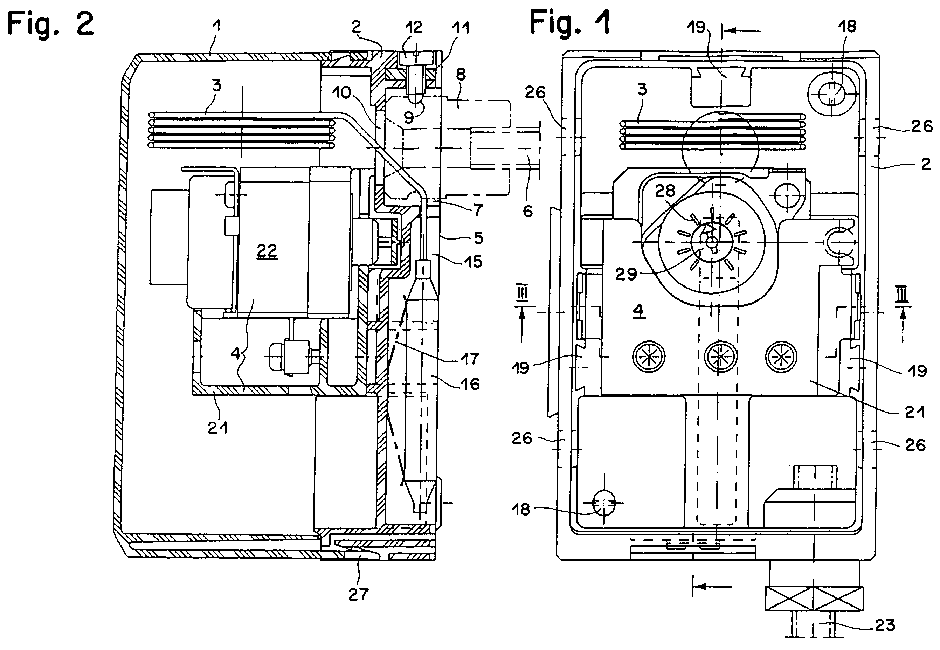

Das Schutzgehäuse bestellt (siehe Fig. 1 bis Fig. 4) aus einem Deckel 1 und einem dosenförmigen Rückenteil 2 . Es dient zum Schutz und zur Montage einer mit einem Kapillarrohr 3 versehenen Baugruppe 4. Die letztere enthält, wie bereits erwähnt, vorzugsweise einen Temperaturregler, einen Temperaturwächter oder einen Sicherheits-Temperaturbegrenzer. Das erfindungsgemässe Schutzgehäuse ermöglicht mehrere Montagearten, darunter eine Schutzrohrmontage, eine Anlegemontage auf ein Durchflussrohr und eine Wandmontage. Zu diesem Zweck ist ein Boden 5 des dosenförmigen Rückenteils 2 aussen so ausgebildet, dass das letztere sowohl auf ein senkrecht zum Boden verlaufendes Schutzrohr 6 (siehe Fig. 2) als auch auf ein parallel zum Boden 5 verlaufendes Durchflussrohr sowie auf eine Wand montierbar ist.

Für die Schutzrohrmontage weist der Boden 5 des dosenförmigen Rückenteils 2 auf seiner Rückseite nach aussen hin eine Ausnehmung 7 auf zur Aufnahme eines Endes des senkrecht zum Boden 5 verlaufenden Schutzrohrs 6. Das letztere ist im Innern eines Wärmeerzeugers (in einem Heizkessel) oder eines Durchflussrohrs quer zur Flussrichtung eines Gases oder einer Flüssigkeit angeordnet, welche das Durchflussrohr durchfliessen, und eines seiner Enden ist durch Schraubbefestigung an einer Aussenwand des Wärmeerzeugers oder Durchflussrohrs z. B. mittels eines Rund- oder Sechskantnippels 8 befestigt (siehe Fig. 2). Die Ausnehmung 7 ist so gestaltet, dass eine Montage des Bodens 5 auf einen Rund- oder Sechskantnippel 8 mit oder ohne Rille 9 (Eindrehung) möglich ist. Die Ausnehmung 7 weist zum Innern des dosenförmigen Rückenteils eine Öffnung 10 zum Durchlass des Kapillarrohrs 3 auf. Als Befestigungsmittel ist seitlich der Ausnehmung 7 eine im Boden 5 des Rückenteils 2 eingelegte Gewindeplatte 11 vorhanden mit einer Schraube 12, die, zur Befestigung des dosenförmigen Rückenteils 2 auf das Schutzrohr 6 bzw. auf dessen Befestigungsnippel 8, senkrecht zu einer Seitenwand der Ausnehmung 7 wirksam ist. Die Gewindeplatte 11 nimmt die von der Schraubbefestigung ausgehende radial wirkende Druckkraft auf. Die Ausnehmung 7 kann als Befestigungsmittel auch ein Federelement aufweisen zum Aufstecken des dosenförmigen Rückenteils 2 auf das Schutzrohr 6 bzw. auf dessen Befestigungsnippel 8. Die Ausnehmung 7 und das Befestigungsmittel sind bevorzugt so ausgebildet, dass die Lage des zur Befestigung des Schutzrohrs 6 verwendeten Sechskantnippels 8 keinen Einfluss auf die Montagelage des dosenförmigen Rückenteils 2 und damit des Schutzgehäuses besitzt. Die Ausnehmung 7 ist zu diesem Zweck vorzugsweise zylinderförmig und weist dann eine Achse auf, die senkrecht zum Boden 5 des Rückenteils 2 verläuft.

Für die Anlegemontage weist der Boden 5 des dosenförmigen Rückenteils 2 auf seiner Rückseite zwei Öffnungen 13 und 14 auf (siehe Fig. 4) zum Durchschlaufen eines in der Zeichnung nicht dargestellten Spannbandes zwecks Befestigung des dosenförmigen Rückenteils 2 auf das Durchflussrohr. Der Boden 5 weist dann ausserdem auf seiner äusseren Rückseite parallel zum Durchflussrohr vorzugsweise einen länglichen Schlitz 15 auf (siehe Fig. 2 und Fig. 4) zur Aufnahme und Einlegen eines z. B. länglichen, stabförmigen Temperaturfühlers 16 (siehe Fig. 2), der an einem Ende des Kapillarrohrs 3 angeschlossen ist. Im länglichen Schlitz 15 ist bevorzugt ein Federelement 17 angeordnet (siehe Fig. 2) zum Andrücken des Temperaturfühlers 16 an das Durchflussrohr zwecks Verminderung einer zugehörigen Temperatur-Zeitkonstante. Der Boden 5 weist vorzugsweise Ausbrechstellen 18 (siehe Fig. 1 und Fig. 4) zur Durchführung von Schrauben auf zwecks Montage des dosenförmigen Rückenteils 2 auf eine Wand.

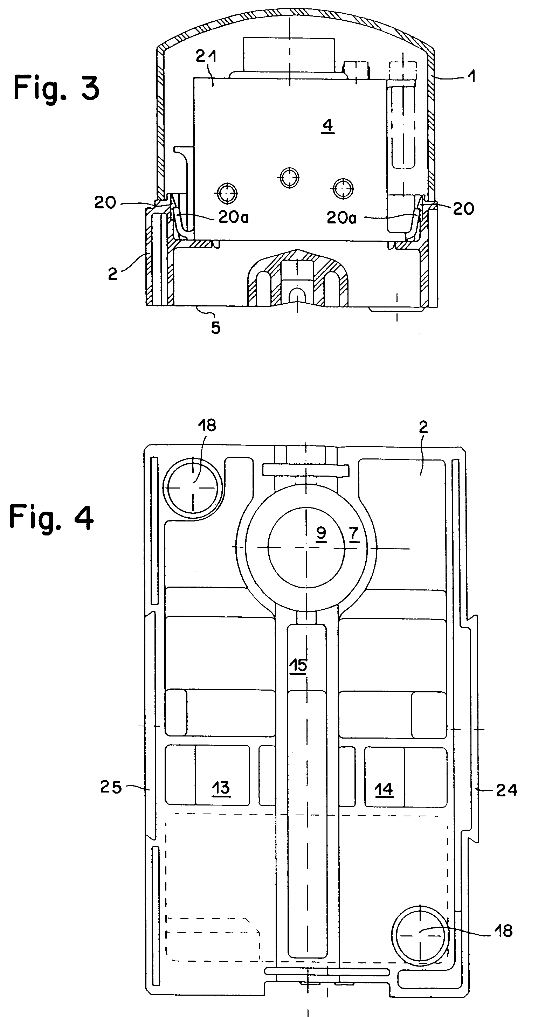

Das Kapillarrohr 3 ist innerhalb des Schutzgehäuses vorzugsweise abwickelbar aufgerollt, z. B. zylinderfederförmig. Im Boden 5 des dosenförmigen Rückenteils 2 ist die Öffnung 10 vorhanden zur Durchführung des Kapillarrohrs 3. Das dosenförmige Rückenteil 2 weist ausserdem, vorzugsweise an drei seiner Wände, entweder Befestigungsanordnungen 19 zur Montage von Distanzbolzen oder sonstigen Zubehörteilen oder Ausnehmungen auf zur Montage einer flachen andere" Baugruppenart, die parallel zum Boden des dosenförmigen Rückenteils montierbar ist. Die Distanzbolzen oder sonstigen Zubehörteile sind zu diesem Zweck je mit einer Ausnehmung versehen. Die Befestigungsanordnungen 19 sind z. B. schwalbenschwanzförmig, während die flache andere Baugruppenart vorzugsweise eine gedruckte Schaltung ist. Das dosenförmige Rückenteil 2 weist mindestens ein Schnappverschlussteil 20 (siehe Fig. 3) auf zum Aufschnappen eines Baugruppenträgers 21, in dem ein elektrisches Bauteil 22 mindestens teilweise gesteckt ist. Der Baugruppenträger 21 ist mit mindestens einem Gegenstück 20a zum Schnappverschlussteil 20 versehen. Vorzugsweise weisen zwei gegenüberliegende Wände des dosenförmigen Rückenteils 2 je ein Schnappverschlussteil 20 auf zum Aufschnappen des Baugruppenträgers 21, der mit je einem Gegenstück 20a zu den beiden Schnappverschlussteilen 20 versehen ist.

Das dosenförmige Rückenteil 2 weist, vorzugsweise an seiner unteren Seite, eine Öffnung zur Zuführung elektrischer Verbindungen, z. B. eines Kabels 23 auf (siehe Fig. 1). Ausserdem weist sie auf zwei gegenüberliegenden Wänden vorzugsweise einen positiven beziehungsweise negativen und ansonsten gleichen Schwalbenschwanz 24 bzw. 25 auf (siehe Fig. 4) zum Zusammenstecken mehrerer Schutzgehäuse zur Bildung eines Mehrfachgehäuses, z. B. eines Doppelgehäuses, durch den Anwender. Ein solches Doppelgehäuse wird z. B. für Schutzrohmontagen benötigt, um zwei Baugruppen 4, in der Regel ein Temperaturregler und ein Sicherheits-Temperaturbegrenzer, einzubauen. Die mit einem Schwalbenschwanz 24 bzw. 25 versehenen Wände des dosenförmigen Rückenteils 2 weisen ausserdem vorgeformte Ausbrechstellen 26 auf (siehe Fig. 1) zur Durchführung, nach einem Ausbrechen, des Kapillarrohrs 3 und/oder elektrischer Verbindungen im Falle einer Montage als Mehrfach-Gehäuse.

Der Deckel 1 des Schutzgehäuses ist einseitig an einer z. B. oberen Seite des dosenförmigen Rückenteils 2 eingehängt und mittels einer Schnappverbindung 27 (siehe Fig. 2) auf einer gegenüberliegenden Seite, z. B. unteren Kabelzuführungsseite, des dosenförmigen Rückenteils 2 befestigt. Bei einem Mehrfach-Gehäuse ist entweder ein Deckel 1 pro dosenförmiges Rückenteil 2 oder ein einziger durchgehender Deckel 1 für alle dosenförmigen Rückenteile 2 vorhanden. Im letzteren Fall ist der einzige Deckel 1 einseitig an einer Seite mindestens eines dosenförmigen Rückenteils 2 eingehängt und mittels mindestens einer Schnappverbindung 27 auf einer gegenüberliegenden Seite mindestens eines dosenförmigen Rückenteils 2 befestigt. Eine Einstellung des Temperaturreglers, des Temperaturwächters oder des Sicherheits-Temperaturbegrenzers ist vorzugsweise von aussen sichtbar. Zu diesem Zweck ist der Deckel 1 durchsichtig oder mit einem durchsichtigen Fenster versehen, was ein Lesen eines Einstellwertes 28 (siehe Fig. 1) mindestens eines Einstellelementes 29, wie z. B. einer Temperatur-Einstellscheibe oder eines Temperatur-Einstellknopfes, ermöglicht. Der Deckel 1 kann jedoch auch undurchsichtig sein.

Das erfindungsgemässe Schutzgehäuse ist somit universell und modulartig einsetzbar. Seine Modulbauweise ermöglicht dem Anwender, d. h. Grosshändler, Installateur, "Do-it"-Verkäufer, usw. ein seinen Anforderungen entsprechendes Gerät baukastenmässig zusammenzustellen. Die Modulbauweise erlaubt dem Anwender also jederzeit die Konfektion eines bestimmten Gerätes, was unter anderem erhebliche Vorteile für die Austauschbarkeit defekter Geräte hat, da der Anwender nur ein kleines Gerätelager mit wenigen Bauteiltypen benötigt, um alle Anwendungen zu realisieren. Dies führt zu erheblichen Einsparungen bei der Beschaffung, Lagerhaltung und im mobilen Feld-Service-Dienst. Das im Schutzgehäuse enthaltene aufgerollte Kapillarrohr 3 besitzt eine minimale Länge von 630 mm und ist in einer Länge von 100 mm bis 600 mm abwickelbar, was eine von einer Grundvariante und dem Schutzgehäuse unabhängige Plazierung des Temperaturfühlers irgendwo in entsprechender Entfernung ermöglicht. Das Schutzgehäuse und sein Inhalt sind demontiert in einem Baukasten verkaufbar zwecks eines massgerechten und anwendungsgerechten einfachen Zusammenbaus vor Ort des Gerätes seitens eines Käufers. Die einzelnen Bauteile des Schutzgehäuses und dessen Inhaltes können also, lose in einem Baukasten verpackt, im "Do-it"-Verkauf vertrieben und vom Käufer selber genau nach Mass für seine Anwendung zu einem funktionsfähigen Gerät zusammengebaut werden.

## Patentansprüche

1. Schutzgehäuse mit Deckel (1) und dosenförmigem Rückenteil (2) zur Montage einer mit einem Kapillarrohr (3) versehenen Baugruppe (4), dadurch gekennzeichnet, dass ein Boden (5) des dosenförmigen Rückenteils (2) aussen so ausgebildet ist, dass das letztere sowohl auf ein senkrecht zum Boden (5) verlaufendes Schutzrohr (6) als auch auf ein parallel zum Boden (5) verlaufendes Durchflussrohr sowie auf eine Wand montierbar ist.

2. Schutzgehäuse nach Anspruch 1, dadurch gekennzeichnet, dass der Boden (5) auf seiner Rückseite eine Ausnehmung (7) aufweist zur Aufnahme eines Endes des senkrecht zum Boden (5) verlaufenden Schutzrohrs (6).

3. Schutzgehäuse nach Anspruch 2, dadurch gekennzeichnet, dass die Ausnehmung (7) so gestaltet ist, dass eine Montage des Bodens (5) auf einen Rund- oder Sechskantnippel (8) mit oder ohne Rille (9) möglich ist.

4. Schutzgehäuse nach Anspruch 2 oder 3, dadurch gekennzeichnet, dass die Ausnehmung (7) zylinderförmig ist und eine Achse aufweist, die senkrecht zum Boden (5) des dosenförmigen Rückenteils (2) verläuft.

5. Schutzgehäuse nach einem der Ansprüche 2 bis 4, dadurch gekennzeichnet, dass die Ausnehmung (7) zum Innern des dosenförmigen Rückenteils (2) eine Öffnung (10) zum Durchlass des Kapillarrohrs (3) aufweist.

6. Schutzgehäuse nach einem der Ansprüche 2 bis 5, dadurch gekennzeichnet, dass als Befestigungsmittel seitlich der Ausnehmung (7) eine eingelegte Gewindeplatte (11) vorhanden ist mit einer Schraube (12), die, zur Befestigung des dosenförmigen Rückenteils (2) auf das Schutzrohr (6), senkrecht zu einer Seitenwand der Ausnehmung (7) wirksam ist.

7. Schutzgehäuse nach einem der Ansprüche 2 bis 5, dadurch gekennzeichnet, dass als Befestigungsmittel die Ausnehmung (7) ein Federelement aufnimmt zum Aufstecken des dosenförmigen Rückenteils (2) auf das Schutzrohr (6).

8. Schutzgehäuse nach Anspruch 6 oder 7, dadurch gekennzeichnet, dass die Ausnehmung (7) und das Befestigungsmittel so ausgebildet sind, dass die Lage eines zur Befestigung des Schutzrohrs (6) verwendeten Sechskantnippels (8) keinen Einfluss auf die Montagelage des dosenförmigen Rückenteils (2) besitzt.

9. Schutzgehäuse nach einem der Ansprüche 1 bis 8, dadurch gekennzeichnet, dass der Boden (5) des dosenförmigen Rückenteils (2) auf seiner Rückseite zwei Öffnungen (13, 14) aufweist zum Durchschlaufen eines Spannbandes zwecks Befestigung in einer Anlegemontage des dosenförmigen Rückenteils (2) auf das Durchflussrohr.

10. Schutzgehäuse nach Anspruch 9, dadurch gekennzeichnet, dass der Boden (5) auf seiner äusseren Rückseite parallel zum Durchflussrohr einen länglichen Schlitz (15) aufweist zur Aufnahme eines Temperaturfühlers (16), der an einem Ende des Kapillarrohrs (3) angeschlossen ist.

11. Schutzgehäuse nach Anspruch 10, dadurch gekennzeichnet, dass im länglichen Schlitz (15) ein Federelement (17) angeordnet ist zum Andrücken des Temperaturfühlers (16) an das Durchflussrohr.

12. Schutzgehäuse nach einem der Ansprüche 1 bis 11, dadurch gekennzeichnet, dass der Boden (5) Ausbrechstellen (18) zur Durchführung von Schrauben aufweist zwecks Montage des dosenförmigen Rückenteils (2) auf eine Wand.

13. Schutzgehäuse nach einem der Ansprüche 1 bis 12, dadurch gekennzeichnet, dass das Kapillarrohr (3) innerhalb des Schutzgehäuses abwickelbar aufgerollt ist und im Boden (5) des dosenförmigen Rückenteils (2) eine Öffnung (10) vorhanden ist zur Durchführung des Kapillarrohrs (3).

14. Schutzgehäuse nach einem der Ansprüche 1 bis 13, dadurch gekennzeichnet, dass das dosenförmige Rückenteil (2) Ausnehmungen aufweist zur Montage einer flachen anderen Baugruppenart, die parallel zum Boden (5) des dosenförmigen Rückenteils (2) montierbar ist.

15. Schutzgehäuse nach einem der Ansprüche 1 bis 13, dadurch gekennzeichnet, dass das dosenförmige Rückenteil Befestigungsanordnungen (19) aufweist zur Montage von Zubehörteilen, die je mit einer Ausnehmung versehen sind zur Montage einer flachen anderen Baugruppenart, die parallel zum Boden (5) des dosenförmigen Rückenteils (2) montierbar ist.

16. Schutzgehäuse nach Anspruch 14 oder 15, dadurch gekennzeichnet, dass die flache andere Baugruppenart eine gedruckte Schaltung ist.

17. Schutzgehäuse nach einem der Ansprüche 1 bis 16, dadurch gekennzeichnet, dass das dosenförmige Rückenteil (2) mindestens ein Schnappverschlussteil (20) aufweist zum Aufschnappen eines Baugruppenträgers (21), der mit mindestens einem Gegenstück (20a) zum Schnappverschlussteil (20) versehen ist.

18. Schutzgehäuse nach einem der Ansprüche 1 bis 16, dadurch gekennzeichnet, dass zwei gegenüberliegende Wände des dosenförmigen Rückenteils (2) je ein Schnappverschlussteil (20) aufweisen zum Aufschnappen eines Baugruppenträgers (21), der mit je einem Gegenstück (20a) zu den beiden Schnappverschlussteilen (20) versehen ist.

19. Schutzgehäuse nach einem der Ansprüche 1 bis 18, dadurch gekennzeichnet, dass das dosenförmige Rückenteil (2) eine Öffnung zur Zuführung elektrischer Verbindungen aufweist.

20. Schutzgehäuse nach einem der Ansprüche 1 bis 19, dadurch gekennzeichnet, dass das dosenförmige Rückenteil (2) auf zwei gegenüberliegenden Wänden einen positiven beziehungsweise negativen und ansonsten gleichen Schwalbenschwanz (24, 25) aufweist zum Zusammenstecken mehrerer Schutzgehäuse zur Bildung eines Mehrfachgehäuses.

21. Schutzgehäuse nach einem der Ansprüche 1 bis 20, dadurch gekennzeichnet, dass Wände des dosenförmigen Rückenteils (2) vorgeformte Ausbrechstellen (26) aufweisen zur Durchführung des Kapillarrohrs (3) und/oder elektrischer Verbindungen.

22. Schutzgehäuse nach einem der Ansprüche 1 bis 21, dadurch gekennzeichnet, dass der Deckel (1) des Schutzgehäuses einseitig an einer Seite des dosenförmigen Rückenteils (2) eingehängt und mittels einer Schnappverbindung (27) auf einer gegenüberliegenden Seite des dosenförmigen Rückenteils (2) befestigt ist.

23. Schutzgehäuse nach einem der Ansprüche 1 bis 21, dadurch gekennzeichnet, dass bei einem Mehrfach-Gehäuse ein einziger durchgehender Deckel (1) für alle dosenförmigen Rückenteile (2) vorhanden ist, der einseitig an einer Seite mindestens eines dosenförmigen Rückenteils (2) eingehängt und mittels mindestens einer Schnappverbindung (27) auf einer gegenüberliegenden Seite mindestens eines dosenförmigen Rückenteils (2) befestigt ist.

24. Schutzgehäuse nach einem der Ansprüche 1 bis 23, dadurch gekennzeichnet, dass die Baugruppe (4) einen Temperaturregler, einen Temperaturwächter oder einen Sicherheits-Temperaturbegrenzer enthält.

25. Schutzgehäuse nach einem der Ansprüche 1 bis 24, dadurch gekennzeichnet, dass eine Einstellung des Temperaturreglers, des Temperaturwächters und des Sicherheits-Temperaturbegrenzers von aussen sichtbar ist.

26. Schutzgehäuse nach Anspruch 25, dadurch gekennzeichnet, dass der Deckel (1) mit einem durchsichtigen Fenster versehen ist.

27. Schutzgehäuse nach Anspruch 25, dadurch gekennzeichnet, dass der Deckel (1) durchsichtig ist.

28. Schutzgehäuse nach einem der Ansprüche 1 bis 24, dadurch gekennzeichnet, dass der Deckel (1) undurchsichtig ist.

29. Schutzgehäuse nach einem der Ansprüche 1 bis 28, dadurch gekennzeichnet, dass das Schutzgehäuse und sein Inhalt demontiert in einem Baukasten verkaufbar sind zwecks eines massgerechten und anwendungsgerechten einfachen Zusammenbaus seitens eines Käufers.
